# EUROPEAN PATENT APPLICATION

(11) **EP 4 647 936 A1**
(43) Date of publication of application: **12.11.2025**
(21) Application number: 25174358.9
(22) Date of filing: 06.05.2025
(51) Int. Cl.: G06F 16/27

(54) **GRAPH DATA WRITE METHODS AND GRAPH DATA WRITE APPARATUSES FOR DISTRIBUTED GRAPH DATABASE**

(30) Priority: 07.05.2024 CN 202410554129
(71) Applicant: Alipay (Hangzhou) Information Technology Co., Ltd., Hangzhou, Zhejiang 310000 (CN)
(72) Inventor: YUAN, XIAOHUA, Hangzhou, Zhejiang, 310000 (CN)
(74) Representative: Fish & Richardson P.C.

(57) **Abstract**

Embodiments of this specification provide a graph data write method and a graph data write apparatus for a distributed graph database. In response to receiving a graph data write request, a graph data write operation is initiated to a graph data storage layer based on stored replica topology information of the distributed graph database. A new primary replica node cluster is selected, at least partially based on geographical location information of a secondary replica node cluster in response to a failure of the graph data write operation, from a first secondary replica node cluster set that completes a previous round of graph data synchronization operation, and replica topology information at an engine analysis layer is synchronously updated. Then, updated replica topology information is obtained from the engine analysis layer, and the graph data write operation is reinitiated to the graph data storage layer based on the updated replica topology information.

## Description

### TECHNICAL FIELD

Embodiments of this specification generally relate to the field of graph databases, and in particular, to graph data write methods and graph data write apparatuses for a distributed graph database.

### BACKGROUND

A graph database is a database that stores data in a graph structure and is suitable for processing data in a complex relationship. In querying the data in a complex relationship, the graph database has higher performance and flexibility than a relational database. With the continuous development of graph computing technologies, the graph database is increasingly applied to various application scenarios, for example, an Internet application scenario.

Graph data include nodes (vertices) and edges, the nodes represent entities, and the edges represent relationships between the entities. For example, in social graph data, each person represents one node, and relationships (for example, friends, families, or colleagues) form edges. As increasingly more entities and relationships are involved in an application scenario, a scale of graph data becomes increasingly larger, and a single data storage node (for example, a server node) cannot provide a sufficient storage capacity to store complete graph data. Therefore, a distributed graph database is proposed.

The distributed graph database is a graph database that stores, manages, and processes graph data on a plurality of data storage nodes. In the distributed graph database, based on a distributed system theory, graph data are segmented into a plurality of graph data shards, and the graph data shards are respectively stored on different data storage nodes. Then, graph data are combined through distributed computing to form complete graph data, so as to provide a graph data service.

When a graph data write operation for the distributed graph database is performed, a graph data write request initiated by a client device is received through an API interface layer, and a graph data write operation for a primary replica node cluster at a graph data storage layer is performed. After the graph data write to the primary replica node cluster succeeds, a data synchronization operation from the primary replica node cluster to a secondary replica node cluster is initiated. After data write to the majority of the secondary replica node clusters succeeds, a successful graph data write response is returned to the client device through the API interface layer, and a data synchronization write operation for the remaining secondary replica node clusters is asynchronously performed. If the graph data write fails, for example, an abnormality occurs in the graph data write to the primary replica node cluster or the data synchronization operation from the primary replica node cluster to the secondary replica node cluster fails, the current primary replica node cluster needs to be migrated to another secondary replica node cluster to perform the graph data write operation again. How to make an appropriate primary replica node cluster migration to efficiently perform the reinitiated graph data write operation becomes an urgent problem to be resolved.

### SUMMARY

Embodiments of this specification provide graph data write methods and graph data write apparatuses for a distributed graph database. According to the graph data write method, when a graph data write failure occurs, a primary replica node cluster can be migrated to an appropriate secondary replica node cluster to efficiently perform a reinitiated graph data write operation.

According to an aspect of the embodiments of this specification, a graph data write method for a distributed graph database is provided, including: in response to receiving a graph data write request, initiating a graph data write operation to a graph data storage layer based on stored replica topology information of the distributed graph database, where the replica topology information includes node cluster identification information and geographical location information of a primary replica node cluster and node cluster identification information and geographical location information of a secondary replica node cluster, and the graph data write operation includes a graph data write operation for the primary replica node cluster and a graph data synchronization operation from the primary replica node cluster to the secondary replica node cluster; selecting, at least partially based on the geographical location information of the secondary replica node cluster in response to a failure of the graph data write operation, a new primary replica node cluster from a first secondary replica node cluster set that completes a previous round of graph data synchronization operation, and synchronously updating replica topology information at an engine analysis layer; and obtaining updated replica topology information from the engine analysis layer, and reinitiating the graph data write operation to the graph data storage layer based on the updated replica topology information.

Optionally, in an example of the above-mentioned aspect, the selecting, at least partially based on the geographical location information of the secondary replica node cluster in response to a failure of the graph data write operation, a new primary replica node cluster from a first secondary replica node cluster set that completes a previous round of graph data synchronization operation includes: in response to a failure of the graph data write operation, determining first relative geographical location information of a first secondary replica node cluster in the first secondary replica node cluster set relative to the primary replica node cluster at least partially based on the geographical location information of the primary replica node cluster and the geographical location information of the secondary replica node cluster; and selecting the new primary replica node cluster from the first secondary replica node cluster set at least partially based on the first relative geographical location information.

Optionally, in an example of the above-mentioned aspect, the geographical location information includes geographical area information and city information, and the relative location information includes information about whether the nodes are located in the same city, the same geographical area, or another geographical area. The selecting the new primary replica node cluster from the first secondary replica node cluster set at least partially based on the first relative geographical location information includes: determining a candidate secondary replica node cluster from the first secondary replica node cluster set at least partially based on the first relative geographical location information; and selecting the new primary replica node cluster from the candidate secondary replica node cluster. In response to the first relative geographical location information indicating that there is a secondary replica node cluster located in the same city, the secondary replica node cluster located in the same city is determined as the candidate secondary replica node cluster, in response to the first relative geographical location information indicating that there is no secondary replica node cluster located in the same city but there is a secondary replica node cluster located in the same geographical area, the secondary replica node cluster located in the same geographical area is determined as the candidate secondary replica node cluster, or in response to the first relative geographical location information indicating that there is no secondary replica node cluster located in the same city and no secondary replica node cluster located in the same geographical area, a secondary replica node cluster located in the another geographical area is determined as the candidate secondary replica node cluster.

Optionally, in an example of the above-mentioned aspect, the candidate secondary replica node cluster includes at least two candidate secondary replica node clusters, and the selecting the new primary replica node cluster from the candidate secondary replica node cluster includes: selecting the new primary replica node cluster from the candidate secondary replica node cluster randomly or in a round-robin manner.

Optionally, in an example of the above-mentioned aspect, the selecting a new primary replica node cluster from a first secondary replica node cluster set at least partially based on the geographical location information of the secondary replica node cluster in response to a failure of the graph data write operation includes: selecting the new primary replica node cluster from the first secondary replica node cluster set at least partially based on geographical location information of a first secondary replica node cluster and geographical location information of a client device in response to a failure of the graph data write operation.

Optionally, in an example of the above-mentioned aspect, the selecting the new primary replica node cluster from the first secondary replica node cluster set at least partially based on geographical location information of a first secondary replica node cluster and geographical location information of a client device in response to a failure of the graph data write operation includes: in response to a failure of the graph data write operation, determining second relative geographical location information of the first secondary replica node cluster relative to the client device at least partially based on the geographical location information of the first secondary replica node cluster and the geographical location information of the client device; and selecting the new primary replica node cluster from the first secondary replica node cluster set at least partially based on the second relative geographical location information.

Optionally, in an example of the above-mentioned aspect, the client device includes at least two client devices, and each client device has a weight coefficient allocated based on a ratio of initiated graph data write request traffic. The selecting the new primary replica node cluster from the first secondary replica node cluster set at least partially based on the second relative geographical location information includes: selecting the new primary replica node cluster from the first secondary replica node cluster set at least partially based on the second relative geographical location information and the weight coefficient of the corresponding client device.

Optionally, in an example of the above-mentioned aspect, the method can further include: in response to a failure of the graph data write operation, receiving a primary replica election request from the first secondary replica node cluster. The selecting the new primary replica node cluster from the first secondary replica node cluster set at least partially based on the second relative geographical location information includes: selecting the new primary replica node cluster from the first secondary replica node cluster set at least partially based on the second relative geographical location information and a receiving time of the primary replica election request.

Optionally, in an example of the above-mentioned aspect, the selecting the new primary replica node cluster from the first secondary replica node cluster set at least partially based on the second relative geographical location information and a receiving time of the primary replica election request includes: determining a communication status of each first secondary replica node cluster based on the receiving time of the primary replica election request; determining data communication overheads between each first secondary replica node cluster and the client device based on the communication status of each first secondary replica node cluster and the second relative geographical location information; and selecting the new primary replica node cluster from the first secondary replica node cluster set based on the data communication overheads of each first secondary replica node cluster.

Optionally, in an example of the above-mentioned aspect, the method further includes: in response to a failure of the graph data write operation, receiving a primary replica election request from the first secondary replica node cluster. The selecting the new primary replica node cluster from the first secondary replica node cluster set at least partially based on the first relative geographical location information includes: selecting the new primary replica node cluster from the first secondary replica node cluster set at least partially based on the first relative geographical location information and a receiving time of the primary replica election request.

Optionally, in an example of the above-mentioned aspect, the selecting the new primary replica node cluster from the first secondary replica node cluster set at least partially based on the first relative geographical location information and a receiving time of the primary replica election request includes: determining a communication status of each first secondary replica node cluster based on the receiving time of the primary replica election request; and selecting the new primary replica node cluster from the first secondary replica node cluster set based on the communication status of each first secondary replica node cluster and the first relative location information relative to the primary replica node cluster.

According to another aspect of this specification, a graph data write apparatus for a distributed graph database is provided, including: a graph data write unit, located at an API interface layer and configured to: in response to receiving a graph data write request, initiate a graph data write operation to a graph data storage layer based on stored replica topology information of the distributed graph database, where the replica topology information includes node cluster identification information and geographical location information of a primary replica node cluster and node cluster identification information and geographical location information of a secondary replica node cluster, and the graph data write operation includes a graph data write operation for the primary replica node cluster and a graph data synchronization operation from the primary replica node cluster to the secondary replica node cluster; a primary replica migration decision unit, located at the graph data storage layer and configured to select, a least partially based on the geographical location information of the secondary replica node cluster in response to a failure of the graph data write operation, a new primary replica node cluster from a first secondary replica node cluster set that completes a previous round of graph data synchronization operation, and synchronously update replica topology information at an engine analysis layer; and a replica topology information acquisition unit, located at the API interface layer and configured to obtain updated replica topology information from the engine analysis layer, so that the graph data write unit reinitiates the graph data write operation to the graph data storage layer based on the updated replica topology information.

Optionally, in an example of the above-mentioned aspect, the primary replica migration decision unit includes: a first relative geographical location determining module, configured to: in response to a failure of the graph data write operation, determine first relative geographical location information of a first secondary replica node cluster in the first secondary replica node cluster set relative to the primary replica node cluster at least partially based on the geographical location information of the primary replica node cluster and the geographical location information of the secondary replica node cluster; and a primary replica selection module, configured to select the new primary replica node cluster from the first secondary replica node cluster set at least partially based on the first relative geographical location information.

Optionally, in an example of the above-mentioned aspect, the geographical location information includes geographical area information and city information, and the relative location information includes information about whether the nodes are located in the same city, the same geographical area, or another geographical area. The primary replica migration decision unit further includes a candidate secondary replica determining module, configured to determine a candidate secondary replica node cluster from the first secondary replica node cluster set at least partially based on the first relative geographical location information. In response to the first relative geographical location information indicating that there is a secondary replica node cluster located in the same city, the candidate secondary replica determining module determines the secondary replica node cluster located in the same city as the candidate secondary replica node cluster, in response to the first relative geographical location information indicating that there is no secondary replica node cluster located in the same city but there is a secondary replica node cluster located in the same geographical area, the candidate secondary replica determining module determines the secondary replica node cluster located in the same geographical area as the candidate secondary replica node cluster, or in response to the first relative geographical location information indicating that there is no secondary replica node cluster located in the same city and no secondary replica node cluster located in the same geographical area, the candidate secondary replica determining module determines a secondary replica node cluster located in the another geographical area as the candidate secondary replica node cluster. The primary replica selection module selects the new primary replica node cluster from the candidate secondary replica node cluster.

Optionally, in an example of the above-mentioned aspect, the primary replica migration decision unit selects the new primary replica node cluster from the first secondary replica node cluster set at least partially based on geographical location information of a first secondary replica node cluster and geographical location information of a client device in response to a failure of the graph data write operation.

Optionally, in an example of the above-mentioned aspect, the primary replica migration decision unit includes: a second relative geographical location determining module, configured to: in response to a failure of the graph data write operation, determine second relative geographical location information of the first secondary replica node cluster relative to the client device at least partially based on the geographical location information of the first secondary replica node cluster and the geographical location information of the client device; and a primary replica selection module, configured to select the new primary replica node cluster from the first secondary replica node cluster set at least partially based on the second relative geographical location information.

Optionally, in an example of the above-mentioned aspect, the graph data write apparatus further includes a primary replica election request receiving unit, configured to: in response to a failure of the graph data write operation, receive a primary replica election request from the first secondary replica node cluster. The primary replica selection module selects the new primary replica node cluster from the first secondary replica node cluster set at least partially based on the second relative geographical location information and a receiving time of the primary replica election request.

Optionally, in an example of the above-mentioned aspect, the primary replica migration decision unit further includes: a communication status determining module, configured to determine a communication status of each first secondary replica node cluster based on the receiving time of the primary replica election request; and a communication overheads determining module, configured to determine data communication overheads between each first secondary replica node cluster and the client device based on the communication status of each first secondary replica node cluster and the second relative geographical location information. The primary replica selection module selects the new primary replica node cluster from the first secondary replica node cluster set based on the data communication overheads of each first secondary replica node cluster.

Optionally, in an example of the above-mentioned aspect, the graph data write apparatus further includes a primary replica election request receiving unit, configured to: in response to a failure of the graph data write operation, receive a primary replica election request from the first secondary replica node cluster. The primary replica migration decision unit selects the new primary replica node cluster from the first secondary replica node cluster set at least partially based on the first relative geographical location information and a receiving time of the primary replica election request.

Optionally, in an example of the above-mentioned aspect, the primary replica migration decision unit includes a communication status determining module, configured to determine a communication status of each first secondary replica node cluster based on the receiving time of the primary replica election request. The primary replica selection module selects the new primary replica node cluster from the first secondary replica node cluster set based on the communication status of each first secondary replica node cluster and the first relative location information relative to the primary replica node cluster.

According to another aspect of the embodiments of this specification, a graph data write apparatus for a distributed graph database is provided, including: at least one processor; a storage coupled to the at least one processor; and a computer program stored in the storage. The at least one processor executes the computer program to implement the above-mentioned graph data write method for a distributed graph database.

### BRIEF DESCRIPTION OF DRAWINGS

The essence and advantages of the content of this specification can be further understood with reference to the following accompanying drawings. In the accompanying drawings, similar components or features can have the same reference numerals.
FIG. 1 is an example schematic diagram illustrating a distributed graph database system;
FIG. 2 is an example schematic diagram illustrating a graph storage topology structure of graph data;
FIG. 3 is an example flowchart illustrating a graph data write method for a distributed graph database, according to embodiments of this specification;
FIG. 4 is an example flowchart illustrating a primary replica node cluster migration process, according to embodiments of this specification;
FIG. 5 is another example flowchart illustrating a primary replica node cluster migration process, according to embodiments of this specification;
FIG. 6 is another example flowchart illustrating a primary replica node cluster migration process, according to embodiments of this specification;
FIG. 7 is another example flowchart illustrating a primary replica node cluster migration process, according to embodiments of this specification;
FIG. 8 is an example block diagram illustrating a graph data write apparatus for a distributed graph database, according to embodiments of this specification;
FIG. 9 is an example block diagram illustrating a primary replica migration decision unit, according to embodiments of this specification;
FIG. 10 is another example block diagram illustrating a primary replica migration decision unit, according to embodiments of this specification; and
FIG. 11 is an example schematic diagram illustrating a graph data write apparatus for a distributed graph database implemented based on a computer system, according to embodiments of this specification.

### DESCRIPTION OF EMBODIMENTS

The subject matter described in this specification is described here with reference to example implementations. It should be understood that these implementations are described only to enable a person skilled in the art to better understand and implement the subject matter described in this specification, and are not intended to limit the protection scope, applicability, or examples described in the claims. The functions and arrangements of the described elements can be changed without departing from the protection scope of the content of this specification. Various processes or components can be omitted, replaced, or added in various examples as needed. For example, the described method can be performed in a sequence different from the described sequence, and the steps can be added, omitted, or combined. In addition, features described relative to some examples can be combined in other examples.

As used in this specification, the term "include" and variants thereof represent an open term, which means "including but not limited to". The term "based on" represents "at least partially based on". The terms "one embodiment" and "one or more embodiments" represent "at least one embodiment". The term "another embodiment" represents "at least one other embodiment". The terms "first", "second", etc. can refer to different or identical objects. Other definitions, whether explicit or implicit, can be included below. Unless expressly specified in the context, the definition of a term is consistent throughout this specification.

A flowchart used in this specification illustrates operations implemented by a system according to some embodiments of this specification. It should be clearly understood that operations in the flowchart can be implemented out of sequence. On the contrary, the operations can be implemented reversely or simultaneously. In addition, one or more other operations can be added to the flowchart, and one or more operations can be removed from the flowchart.

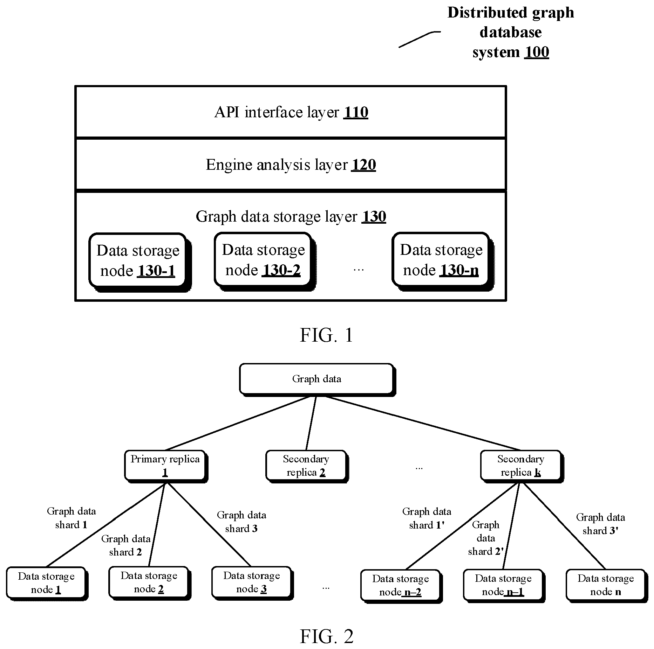

FIG. 1 is an example schematic diagram illustrating an architecture of a distributed graph database system 100.

As shown in FIG. 1, the distributed graph database system 100 includes an API interface layer 110, an engine analysis layer 120, and a graph data storage layer 130. The API interface layer 110 is configured to implement interaction with the outside of the graph database system, for example, receive a graph data processing request of a client device on which an upstream/downstream application of a graph database is installed, for example, a graph data read/write request or a replica expansion request. In addition, the API interface layer 110 can further perform other operations on the graph database, for example, white-screening of a graph database function, parameter security check, graph database function combination, and a graph database visualization operation.

The engine analysis layer 120 is configured to manage metadata of stored graph data, for example, generate, store, and update the metadata. The metadata of the stored graph data include replica topology information of the graph data. For example, the replica topology information can include a quantity of replicas to which the graph data are replicated, a node cluster in which each replica is stored, data storage node distribution information of each node cluster (that is, a data storage node included in each node cluster and a graph data shard stored on each data storage node), node cluster identification information and geographical location information of a primary replica node cluster and node cluster identification information and geographical location information of a secondary replica node cluster, etc. FIG. 2 is an example schematic diagram illustrating replica topology information of graph data.

As shown in FIG. 2, when the graph data are stored in a distributed manner, the graph data are split to obtain a plurality of graph data shards (for example, three graph data shards), and then shard data of one or more graph data shards are hashed and stored on a data storage node in a primary replica node cluster, thereby completing a graph data write operation for the primary replica node cluster. The graph data shards are then synchronized from the primary replica node cluster to a plurality of secondary replica node clusters, thereby completing distributed graph data storage.

In some embodiments, the metadata can further include node status information of the data storage node. The node status information can include, for example, a rated storage capacity, an available storage capacity, a node working mode (readable/writable, unreadable/unwritable, etc.), a process activation status (an active state, an inactive state, etc.), and/or a node health status of the data storage node.

The graph data storage layer 130 is configured to implement distributed storage of graph data. The graph data storage layer 130 can include a primary replica node cluster and a plurality of secondary replica node clusters, and each replica node cluster is configured to store one replica of the graph data. Each replica node cluster can include one or more data storage nodes, and each data storage node is configured to store some graph data shards (for example, one or more graph data shards) of the graph data.

In some embodiments, the API interface layer 110 and/or the engine analysis layer 120 can be implemented by one or more node devices. When the engine analysis layer 120 is implemented by a plurality of node devices, the node devices of the engine analysis layer 120 include a primary node device and a secondary node device. The primary node device is responsible for interacting with the API interface layer 110 and the graph data storage layer 130 to respond to a request initiated by the API interface layer 110 or replica topology information reported by the graph data storage layer 130. The secondary node device is responsible for metadata synchronization and is always ready to participate in election to become a primary node device. In some embodiments, the API interface layer 110 and the engine analysis layer 120 can alternatively be implemented by the same node device.

Components at the API interface layer 110, the engine analysis layer 120, and the graph data storage layer 130 can communicate directly or through a network. In some embodiments, the network can be any one or more of a wired network or a wireless network. Examples of the network can include but are not limited to a cable network, an optical fiber network, a telecommunication network, an enterprise intranet, the Internet, a local area network (LAN), a wide area network (WAN), a wireless local area network (WLAN), a metropolitan area network (MAN), a public switched telephone network (PSTN), a Bluetooth network, ZigBee, near field communication (NFC), an in-device bus, an in-device line, or any combination thereof. In some embodiments, the API interface layer 110 and the engine analysis layer 120 can form a server-client (S/C) architecture with the graph data storage layer 130.

However, when a graph data write operation is performed, if the graph data write fails, for example, an abnormality occurs in the graph data write to the primary replica node cluster or the data synchronization operation from the primary replica node cluster to the secondary replica node cluster fails, the current primary replica node cluster needs to be migrated to another secondary replica node cluster to use the secondary replica node cluster as a new primary replica node cluster to perform the graph data write operation again. Because each secondary replica node cluster is located in a different geographical location, when secondary replica node clusters at different geographical locations are used as new primary replica node clusters to perform the graph data write operation, efficiency of the graph data write operation is different.

Therefore, embodiments of this specification provide a graph data write solution for distributed graph data. According to the graph data write solution, when a graph data write failure occurs, a primary replica node cluster migration decision is made based on geographical location information of a secondary replica node cluster, so that a current primary replica node cluster is migrated to an appropriate secondary replica node cluster to efficiently perform a reinitiated graph data write operation.

The graph data write method and the graph data write apparatus for a distributed graph database according to embodiments of this specification are described below with reference to the accompanying drawings.

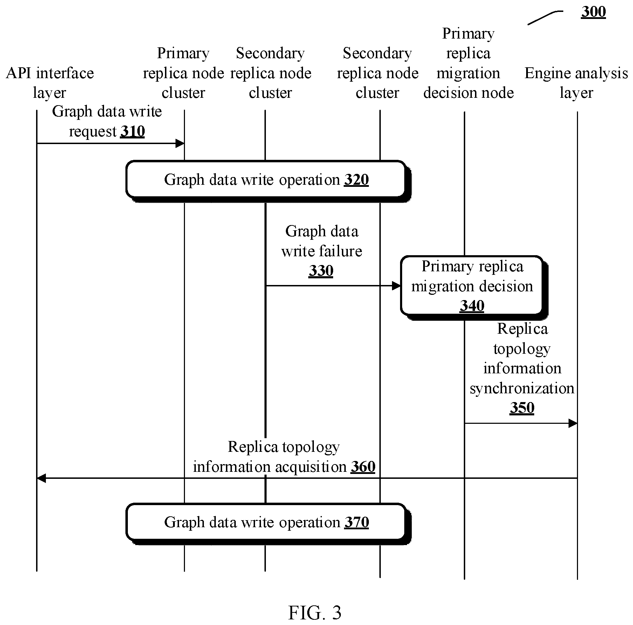

FIG. 3 is an example flowchart illustrating a graph data write method 300 for a distributed graph database, according to embodiments of this specification.

In 310, in response to receiving a graph data write request, a graph data write request is initiated to a primary replica node cluster at a graph data storage layer based on stored replica topology information of the distributed graph database.

When a graph data write operation is performed, a user can use a client device to initiate a graph data write request through an API interface layer. The API interface layer prestores replica topology information of the graph data storage layer. The replica topology information includes node cluster identification information of the primary replica node cluster and node cluster identification information of a secondary replica node cluster, that is, how many replica node clusters are included at the graph data storage layer and in these replica node clusters, which replica node cluster is the primary replica node cluster and which replica node cluster is the secondary replica node cluster. In addition, the replica topology information can further include geographical location information of the replica node cluster. In some embodiments, the geographical location information can include geographical area information (zone) and city information (region). For example, if the replica node cluster is deployed in Shanghai, the corresponding geographical location information is: "The geographical area is South China and the city is Shanghai".

It is worthwhile to note that when the replica node cluster is initially deployed, the primary replica node cluster and the secondary replica node cluster are disposed based on service traffic distribution. For example, assume that the service traffic distribution is that 80% of service traffic is from a client device located in Shanghai and 20% of the service traffic is from a client device located in Tianjin, the deployed replica node cluster includes five replica node clusters, two replica node clusters are deployed in Shanghai, two replica node clusters are deployed in Hangzhou, and one replica node cluster is deployed in Beijing. In this case, one replica node cluster deployed in Shanghai is disposed as a primary replica node cluster and other replica node clusters are disposed as secondary replica node clusters. In this primary-secondary replica node cluster disposing manner, responses to the majority of graph data write requests can be made in the same city, thereby reducing communication overheads of the graph data write operation and increasing a write speed of the graph data write operation.

In some embodiments, when the primary replica node cluster is initially disposed, overall graph data write costs for the graph data write operation can be estimated based on the geographical location information of the replica node cluster, that is, graph data write costs for all graph data write operations initiated by the client device, including costs for graph data write from the client device to the primary replica node cluster and costs for graph data synchronization between the primary and secondary replica node clusters. Then, a replica node cluster with graph data write costs satisfying a predetermined condition (for example, lowest graph data write costs or the graph data write costs are less than a predetermined threshold) is disposed as the primary replica node cluster. In some embodiments, the geographical location information of the replica node cluster can include geographical coordinate information, so that the overall graph data write costs for the graph data write operation can be estimated based on the geographical coordinate information of the replica node cluster.

The API interface layer obtains the replica topology information from an engine analysis layer, and locally stores the obtained replica topology information. After each time the graph data write request is received, the API interface layer performs a graph data write process by using the locally stored replica topology information. If a graph data write failure occurs, the API interface layer obtains new replica topology information from the engine analysis layer again and updates the local replica topology information. Then, after a new graph data write request is received, the API interface layer performs the current graph data write process by using the updated replica topology information. If no graph data write failure occurs, the API interface layer does not obtain new replica topology information from the engine analysis layer to update the local replica topology information.

After the graph data write request is received, in 320, a graph data write operation for the primary replica node cluster and a graph data synchronization operation from the primary replica node cluster to the secondary replica node cluster are performed.

Specifically, after the graph data write request is received, the API interface layer locates the primary replica node cluster based on the node cluster identification information of the primary replica node cluster in the stored replica topology information, and initiates a graph data write process for the primary replica node cluster. After the graph data write to the primary replica node cluster succeeds, the primary replica node cluster asynchronously synchronizes written graph data to each secondary replica node cluster. After graph data write to each replica node cluster succeeds, a graph data write success message is returned to the client device through the API interface layer. After the client device receives a predetermined quantity of graph data write success messages (that is, graph data write to the majority of replica node clusters succeeds), the client device considers that the current graph data write succeeds. For the remaining secondary replica node clusters that do not complete graph data write, graph data synchronization can continue to be performed in an asynchronous synchronization manner. If a graph data write failure for the primary replica node cluster occurs, a graph data write failure message is returned to the client device, or if a quantity of data synchronization failures from the primary replica node cluster to the secondary replica node cluster reaches a predetermined quantity, a graph data write failure message is returned to the client device. It is worthwhile to note that in some embodiments, provided that the client device receives the graph data write failure message, it is considered that the current graph data write fails. In some embodiments, after receiving the graph data write failure message, the client device can reinitiate the graph data write operation. Only when a quantity of received graph data write failure messages reaches a predetermined threshold, it is considered that the current graph data write fails.

In response to a failure of the graph data write operation (330), in 340, a new primary replica node cluster is selected, through a primary replica migration decision unit at least partially based on geographical location information of the secondary replica node cluster, from a first secondary replica node cluster set that completes a previous round of graph data synchronization operation, to complete a primary replica node cluster migration. In this specification, the primary replica migration decision unit can be implemented by a single dedicated node at the graph data storage layer, or can be integrated into a data storage node at the graph data storage layer. A primary replica node cluster migration process can be described in detail later with reference to the accompanying drawings.

In the manner of making a primary replica node cluster migration decision based on the geographical location information of the secondary replica node cluster, the primary replica node cluster can be migrated to a secondary replica node cluster with an appropriate geographical location to efficiently perform the reinitiated graph data write operation.

After the primary replica node cluster migration is completed, in 350, the replica topology information at the engine analysis layer is synchronously updated based on the determined new primary replica node cluster and the secondary replica node cluster.

In 360, the API interface layer obtains the updated replica topology information from the engine analysis layer. In 370, the API interface layer reinitiates the graph data write operation to the graph data storage layer based on the updated replica topology information, that is, initiates a graph data write operation for the new primary replica node cluster and a graph data synchronization operation from the new primary replica node cluster to the secondary replica node cluster.

It is worthwhile to note that only after a first predetermined time elapses after the graph data write operation fails, the API interface layer can initiate a process of obtaining the replica topology information at the engine analysis layer. The first predetermined time can be set to be sufficient for the primary replica migration decision unit to complete the primary replica node cluster migration.

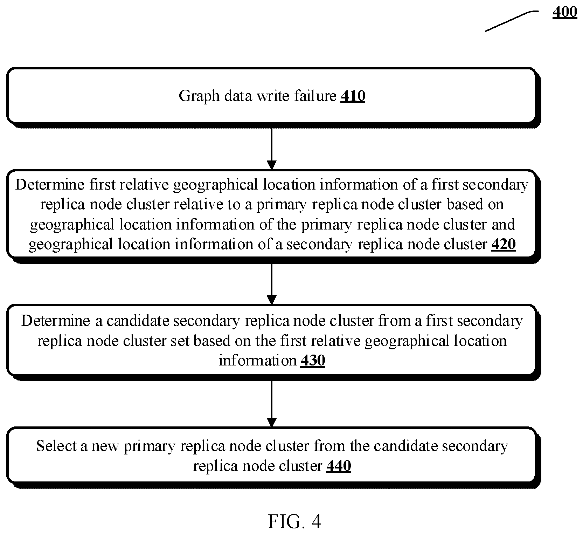

FIG. 4 is an example flowchart illustrating a primary replica node cluster migration process 400, according to embodiments of this specification.

As shown in FIG. 4, after a graph data write failure occurs (410), in 420, a primary replica migration decision unit determines, at least partially based on geographical location information of a primary replica node cluster and geographical location information of a secondary replica node cluster, first relative geographical location information of a first secondary replica node cluster in a first secondary replica node cluster set that completes a previous round of graph data synchronization relative to the primary replica node cluster.

After determining the first relative geographical location information of the first secondary replica node cluster relative to the primary replica node cluster, the primary replica migration decision unit selects a new primary replica node cluster from the first secondary replica node cluster set at least partially based on the determined first relative geographical location information.

In some embodiments, the geographical location information of the primary replica node cluster and the geographical location information of the secondary replica node cluster can include geographical area information and city information, and the first relative location information includes information about whether the nodes are located in the same city, the same geographical area, or another geographical area.

In this case, as shown in FIG. 4, in 430, the primary replica migration decision unit can determine a candidate secondary replica node cluster from the first secondary replica node cluster set at least partially based on the first relative geographical location information. Specifically, in response to the first relative geographical location information indicating that there is a secondary replica node cluster located in the same city, the secondary replica node cluster located in the same city is determined as the candidate secondary replica node cluster. In response to the first relative geographical location information indicating that there is no secondary replica node cluster located in the same city but there is a secondary replica node cluster located in the same geographical area, the secondary replica node cluster located in the same geographical area is determined as the candidate secondary replica node cluster. In response to the first relative geographical location information indicating that there is no secondary replica node cluster located in the same city and no secondary replica node cluster located in the same geographical area, a secondary replica node cluster located in the another geographical area is determined as the candidate secondary replica node cluster.

After the candidate secondary replica node cluster is determined, in 440, the new primary replica node cluster is selected from the candidate secondary replica node cluster. If the candidate secondary replica node cluster includes only one candidate secondary replica node cluster, the candidate secondary replica node cluster is determined as the new primary replica node cluster. If the candidate secondary replica node cluster includes at least two candidate secondary replica node clusters, the new primary replica node cluster can be selected from the candidate secondary replica node cluster randomly or in a round-robin manner.

In some embodiments, a client device can also have geographical location information, for example, a geographical area and a city. When the candidate secondary replica node cluster includes at least two candidate secondary replica node clusters, second relative geographical location information between the client device and the candidate secondary replica node cluster can be further determined, and the new primary replica node cluster is selected from the candidate secondary replica node cluster based on the second relative geographical location information.

In some embodiments, the geographical location information of the primary replica node cluster and the geographical location information of the secondary replica node cluster can further include geographical coordinate information. In this case, if the candidate secondary replica node cluster includes at least two candidate secondary replica node clusters, a relative physical distance between the candidate secondary replica node cluster and the primary replica node cluster can be determined based on geographical coordinate information of the candidate secondary replica node cluster and the geographical coordinate information of the primary replica node cluster, and a candidate secondary replica node cluster with a shortest relative physical distance can be selected from the candidate secondary replica node cluster as the new primary replica node cluster based on the determined relative physical distance.

In the above-mentioned manner of making a primary replica node cluster migration decision based on the geographical location information of the secondary replica node cluster and the geographical location information of the current primary replica node cluster, the determined new primary replica node cluster has a more similar cluster characteristic to the old primary replica node cluster in terms of distance, so that graph data write performance of the old primary replica node cluster can be better inherited, to efficiently implement a reinitiated graph data write operation.

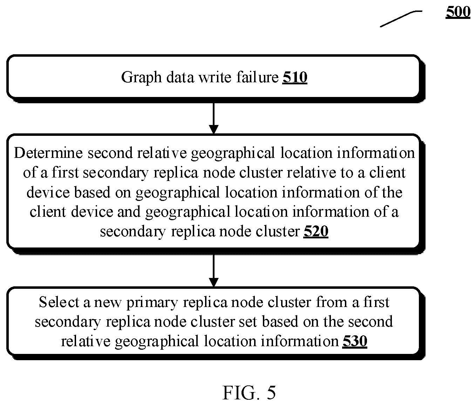

FIG. 5 is another example flowchart illustrating a primary replica node cluster migration process 500, according to embodiments of this specification.

As shown in FIG. 5, after a graph data write failure occurs (510), in 520, a primary replica migration decision unit at a graph data storage layer determines, at least partially based on geographical location information of a client device and geographical location information of a secondary replica node cluster, second relative geographical location information of a first secondary replica node cluster in a first secondary replica node cluster set that completes a previous round of graph data synchronization relative to the client device.

After determining the second relative geographical location information of the first secondary replica node cluster relative to the client device, in 530, the primary replica migration decision unit selects a new primary replica node cluster from the first secondary replica node cluster set at least partially based on the determined second relative geographical location information.

In some embodiments, the geographical location information of the client device and the geographical location information of the secondary replica node cluster can include geographical area information and city information, and the second relative location information includes information about whether the nodes are located in the same city, the same geographical area, or another geographical area.

In this case, the primary replica migration decision unit can determine a candidate secondary replica node cluster from the first secondary replica node cluster set at least partially based on the second relative geographical location information. Specifically, in response to the second relative geographical location information indicating that there is a secondary replica node cluster located in the same city, the secondary replica node cluster located in the same city is determined as the candidate secondary replica node cluster. In response to the second relative geographical location information indicating that there is no secondary replica node cluster located in the same city but there is a secondary replica node cluster located in the same geographical area, the secondary replica node cluster located in the same geographical area is determined as the candidate secondary replica node cluster. In response to the second relative geographical location information indicating that there is no secondary replica node cluster located in the same city and no secondary replica node cluster located in the same geographical area, a secondary replica node cluster located in the another geographical area is determined as the candidate secondary replica node cluster.

After the candidate secondary replica node cluster is determined, the new primary replica node cluster is selected from the candidate secondary replica node cluster. If the candidate secondary replica node cluster includes only one candidate secondary replica node cluster, the candidate secondary replica node cluster is determined as the new primary replica node cluster. If the candidate secondary replica node cluster includes at least two candidate secondary replica node clusters, the new primary replica node cluster can be selected from the candidate secondary replica node cluster randomly or in a round-robin manner.

In some embodiments, the geographical location information of the client device and the geographical location information of the secondary replica node cluster can further include geographical coordinate information. In this case, if the candidate secondary replica node cluster includes at least two candidate secondary replica node clusters, a relative physical distance between the candidate secondary replica node cluster and the client device can be determined based on geographical coordinate information of the candidate secondary replica node cluster and the geographical coordinate information of the client device, and a candidate secondary replica node cluster with a shortest relative physical distance can be selected from the candidate secondary replica node cluster as the new primary replica node cluster based on the determined relative physical distance.

In some embodiments, the client device includes at least two client devices, and each client device has a weight coefficient allocated based on a ratio of initiated graph data write request traffic. The ratio of the initiated graph data write request traffic can be a ratio of the graph data write request traffic currently initiated by the client device to total graph data write request traffic. In this case, the primary replica migration decision unit can select the new primary replica node cluster from the first secondary replica node cluster set at least partially based on the second relative geographical location information and the weight coefficient of the corresponding client device. For example, a corresponding primary replica migration score can be assigned to the secondary replica node cluster based on a type or value of the second relative geographical location information of the secondary replica node cluster. For example, when the second relative geographical location information includes three types: information about whether the nodes are located in the same city, the same geographical area, or another geographical area, the corresponding primary replica migration score can be assigned to the secondary replica node cluster based on the type of the second relative geographical location information. A primary replica migration score corresponding to the information about whether the nodes are located in the same city is the highest, followed by a primary replica migration score corresponding to the information about whether the nodes are located in the same geographical area, and a primary replica migration score corresponding to the information about whether the nodes are located in another geographical area is the lowest. When the second relative geographical location information includes a relative physical distance calculated based on geographical coordinates, a corresponding primary replica migration score can be determined based on a distance value of the relative physical distance. A smaller value of the relative physical distance indicates a higher corresponding primary replica migration score. Then, a final primary replica migration score of the secondary replica node cluster is calculated based on the primary replica migration score of the secondary replica node cluster and the weight coefficient of the corresponding client device. Then, the new primary replica node cluster is selected from the first secondary replica node cluster set based on the final primary replica migration score of the secondary replica node cluster.

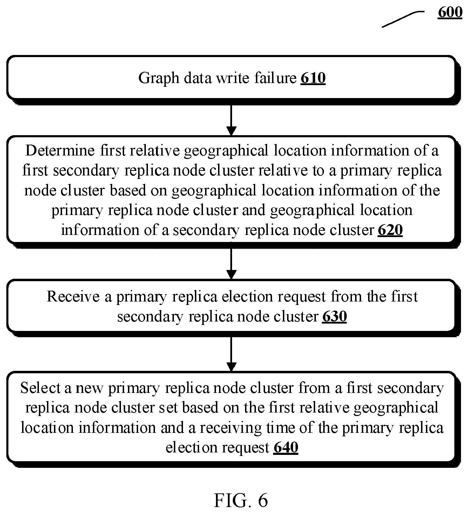

FIG. 6 is another example flowchart illustrating a primary replica node cluster migration process 600, according to embodiments of this specification.

As shown in FIG. 6, after a graph data write failure occurs (610), in 620, a primary replica migration decision unit determines, at least partially based on geographical location information of a primary replica node cluster and geographical location information of a secondary replica node cluster, first relative geographical location information of a first secondary replica node cluster in a first secondary replica node cluster set that completes a previous round of graph data synchronization relative to the primary replica node cluster.

In 630, the primary replica migration decision unit receives a primary replica election request from the first secondary replica node cluster.

In 640, the primary replica migration decision unit selects a new primary replica node cluster from the first secondary replica node cluster set at least partially based on the first relative geographical location information and a receiving time of the primary replica election request.

For example, the primary replica migration decision unit can determine a communication status of each first secondary replica node cluster based on the receiving time of the primary replica election request. In some examples, a communication status identification value can be calculated by using the receiving time, to identify the communication status of the first secondary replica node cluster. A longer receiving time indicates a smaller corresponding communication status identification value and a worse communication status of the first secondary replica node cluster.

Then, the primary replica migration decision unit selects the new primary replica node cluster from the first secondary replica node cluster set based on the communication status of each first secondary replica node cluster and the first relative location information relative to the primary replica node cluster. In some embodiments, a final primary replica migration score of each first secondary replica node cluster can be determined based on the communication status identification value of each first secondary replica node cluster and a primary replica migration score determined based on the first relative location information, and the new primary replica node cluster is selected based on the final primary replica migration score.

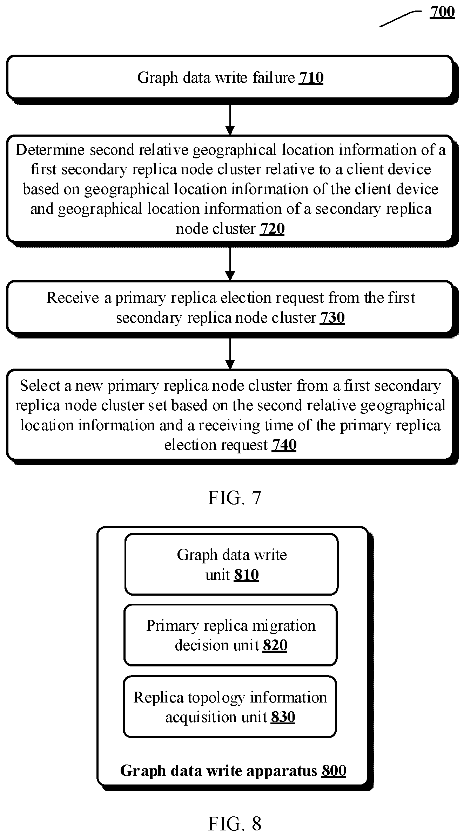

FIG. 7 is another example flowchart illustrating a primary replica node cluster migration process 700, according to embodiments of this specification.

As shown in FIG. 7, after a graph data write failure occurs (710), in 720, a primary replica migration decision unit determines, at least partially based on geographical location information of a client device and geographical location information of a secondary replica node cluster, second relative geographical location information of a first secondary replica node cluster in a first secondary replica node cluster set that completes a previous round of graph data synchronization relative to the client device.

In 730, the primary replica migration decision unit receives a primary replica election request from the first secondary replica node cluster.

In 740, the primary replica migration decision unit selects a new primary replica node cluster from the first secondary replica node cluster set at least partially based on the second relative geographical location information and a receiving time of the primary replica election request.

In some embodiments, the primary replica migration decision unit can determine a communication status of each first secondary replica node cluster based on the receiving time of the primary replica election request. In some examples, a communication status identification value can be calculated by using the receiving time, to identify the communication status of the first secondary replica node cluster. A longer receiving time indicates a smaller corresponding communication status identification value and a worse communication status of the first secondary replica node cluster.

Then, the primary replica migration decision unit determines data communication overheads between each first secondary replica node cluster and the client device based on the communication status of each first secondary replica node cluster and the second relative geographical location information. Then, the primary replica migration decision unit selects the new primary replica node cluster from the first secondary replica node cluster set based on the data communication overheads of each first secondary replica node cluster.

FIG. 8 is an example block diagram illustrating a graph data write apparatus 800 for a distributed graph database, according to embodiments of this specification. As shown in FIG. 8, the graph data write apparatus 800 includes a graph data write unit 810, a primary replica migration decision unit 820, and a replica topology information acquisition unit 830.

The graph data write unit 810 is deployed at an API interface layer. In response to receiving a graph data write request, the graph data write unit 810 initiates a graph data write operation to a graph data storage layer based on stored replica topology information of the distributed graph database, where the stored replica topology information includes node cluster identification information and geographical location information of a primary replica node cluster and node cluster identification information and geographical location information of a secondary replica node cluster, and the initiated graph data write operation includes a graph data write operation for the primary replica node cluster and a graph data synchronization operation from the primary replica node cluster to the secondary replica node cluster.

The primary replica migration decision unit 820 is deployed at the graph data storage layer. The primary replica migration decision unit 820 selects, a least partially based on the geographical location information of the secondary replica node cluster in response to a failure of the graph data write operation, a new primary replica node cluster from a first secondary replica node cluster set that completes a previous round of graph data synchronization operation, and synchronously updates replica topology information at an engine analysis layer.

In some embodiments, the primary replica migration decision unit 820 can select the new primary replica node cluster from the first secondary replica node cluster set at least partially based on geographical location information of a first secondary replica node cluster and the geographical location information of the primary replica node cluster. In some embodiments, the primary replica migration decision unit 820 can select the new primary replica node cluster from the first secondary replica node cluster set at least partially based on geographical location information of a first secondary replica node cluster and geographical location information of a client device.

The replica topology information acquisition unit 830 is deployed at the API interface layer. The replica topology information acquisition unit 830 obtains updated replica topology information from the engine analysis layer, so that the graph data write unit 810 reinitiates the graph data write operation to the graph data storage layer based on the updated replica topology information.

In some embodiments, the graph data write apparatus can further include a primary replica election request receiving unit. In response to a failure of the graph data write operation, the primary replica election request receiving unit receives a primary replica election request from the first secondary replica node cluster. The primary replica migration decision unit selects the new primary replica node cluster from the first secondary replica node cluster set at least partially based on the geographical location information of the secondary replica node cluster and a receiving time of the primary replica election request.

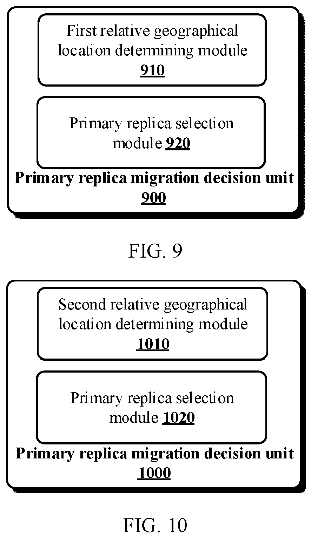

FIG. 9 is an example block diagram illustrating a primary replica migration decision unit 900, according to embodiments of this specification. As shown in FIG. 9, the primary replica migration decision unit 900 includes a first relative geographical location determining module 910 and a primary replica selection module 920.

In response to a failure of a graph data write operation, the first relative geographical location determining module 910 determines first relative geographical location information of a first secondary replica node cluster in a first secondary replica node cluster set relative to a primary replica node cluster at least partially based on geographical location information of the primary replica node cluster and geographical location information of a secondary replica node cluster. Then, the primary replica selection module 920 selects a new primary replica node cluster from the first secondary replica node cluster set at least partially based on the first relative geographical location information.

In some embodiments, the geographical location information includes geographical area information and city information, and the first relative location information includes information about whether the nodes are located in the same city, the same geographical area, or another geographical area. In this case, the primary replica migration decision unit 900 can further include a candidate secondary replica determining module (not shown). The candidate secondary replica determining module determines a candidate secondary replica node cluster from the first secondary replica node cluster set at least partially based on the first relative geographical location information. For example, in response to the first relative geographical location information indicating that there is a secondary replica node cluster located in the same city, the candidate secondary replica determining module determines the secondary replica node cluster located in the same city as the candidate secondary replica node cluster. In response to the first relative geographical location information indicating that there is no secondary replica node cluster located in the same city but there is a secondary replica node cluster located in the same geographical area, the candidate secondary replica determining module determines the secondary replica node cluster located in the same geographical area as the candidate secondary replica node cluster. In response to the first relative geographical location information indicating that there is no secondary replica node cluster located in the same city and no secondary replica node cluster located in the same geographical area, the candidate secondary replica determining module determines a secondary replica node cluster located in the another geographical area as the candidate secondary replica node cluster.

The primary replica selection module selects the new primary replica node cluster from the candidate secondary replica node cluster. In some examples, if the candidate secondary replica node cluster includes only one candidate secondary replica node cluster, the primary replica selection module determines the candidate secondary replica node cluster as the new primary replica node cluster. If the candidate secondary replica node cluster includes at least two candidate secondary replica node clusters, the primary replica selection module can select the new primary replica node cluster from the candidate secondary replica node cluster randomly or in a round-robin manner.

In some embodiments, a client device can also have geographical location information, for example, a geographical area and a city. When the candidate secondary replica node cluster includes at least two candidate secondary replica node clusters, the primary replica selection module can further determine second relative geographical location information between the client device and the candidate secondary replica node cluster, and select the new primary replica node cluster from the candidate secondary replica node cluster based on the second relative geographical location information.

In some embodiments, the geographical location information of the primary replica node cluster and the geographical location information of the secondary replica node cluster can further include geographical coordinate information. In this case, if the candidate secondary replica node cluster includes at least two candidate secondary replica node clusters, the primary replica selection module can determine a relative physical distance between the candidate secondary replica node cluster and the primary replica node cluster based on geographical coordinate information of the candidate secondary replica node cluster and the geographical coordinate information of the primary replica node cluster, and select a candidate secondary replica node cluster with a shortest relative physical distance from the candidate secondary replica node cluster as the new primary replica node cluster based on the determined relative physical distance.

When a graph data write apparatus includes a primary replica election request receiving unit, the primary replica migration decision unit can select the new primary replica node cluster from the first secondary replica node cluster set at least partially based on first relative geographical location information of each first secondary replica node cluster relative to the primary replica node cluster and a receiving time of a primary replica election request.

In some embodiments, the primary replica migration decision unit can include a communication status determining module and the primary replica selection module. The communication status determining module is configured to determine a communication status of each first secondary replica node cluster based on the receiving time of the primary replica election request. Then, the primary replica selection module selects the new primary replica node cluster from the first secondary replica node cluster set based on the communication status of each first secondary replica node cluster and the first relative location information relative to the primary replica node cluster.

FIG. 10 is another example block diagram illustrating a primary replica migration decision unit 1000, according to embodiments of this specification. As shown in FIG. 10, the primary replica migration decision unit 1000 includes a second relative geographical location determining module 1010 and a primary replica selection module 1020.

In response to a failure of a graph data write operation, the second relative geographical location determining module 1010 determines second relative geographical location information of a first secondary replica node cluster in a first secondary replica node cluster set relative to a client device at least partially based on geographical location information of the client device and geographical location information of a secondary replica node cluster. Then, the primary replica selection module 1020 selects a new primary replica node cluster from the first secondary replica node cluster set at least partially based on the second relative geographical location information.

In some embodiments, the geographical location information includes geographical area information and city information, and the second relative location information includes information about whether the nodes are located in the same city, the same geographical area, or another geographical area. In this case, the primary replica migration decision unit 1000 can further include a candidate secondary replica determining module (not shown). The candidate secondary replica determining module determines a candidate secondary replica node cluster from the first secondary replica node cluster set at least partially based on the second relative geographical location information. For example, in response to the second relative geographical location information indicating that there is a secondary replica node cluster located in the same city, the candidate secondary replica determining module determines the secondary replica node cluster located in the same city as the candidate secondary replica node cluster. In response to the second relative geographical location information indicating that there is no secondary replica node cluster located in the same city but there is a secondary replica node cluster located in the same geographical area, the candidate secondary replica determining module determines the secondary replica node cluster located in the same geographical area as the candidate secondary replica node cluster. In response to the second relative geographical location information indicating that there is no secondary replica node cluster located in the same city and no secondary replica node cluster located in the same geographical area, the candidate secondary replica determining module determines a secondary replica node cluster located in the another geographical area as the candidate secondary replica node cluster.

The primary replica selection module selects the new primary replica node cluster from the candidate secondary replica node cluster. In some examples, if the candidate secondary replica node cluster includes only one candidate secondary replica node cluster, the primary replica selection module determines the candidate secondary replica node cluster as the new primary replica node cluster. If the candidate secondary replica node cluster includes at least two candidate secondary replica node clusters, the primary replica selection module can select the new primary replica node cluster from the candidate secondary replica node cluster randomly or in a round-robin manner.

In some embodiments, the geographical location information of the client device and the geographical location information of the secondary replica node cluster can further include geographical coordinate information. In this case, if the candidate secondary replica node cluster includes at least two candidate secondary replica node clusters, the primary replica selection module can determine a relative physical distance between the candidate secondary replica node cluster and the client device based on geographical coordinate information of the candidate secondary replica node cluster and the geographical coordinate information of the client device, and select a candidate secondary replica node cluster with a shortest relative physical distance from the candidate secondary replica node cluster as the new primary replica node cluster based on the determined relative physical distance.

In some embodiments, the client device includes at least two client devices, and each client device has a weight coefficient allocated based on a ratio of initiated graph data write request traffic. The ratio of the initiated graph data write request traffic can be a ratio of the graph data write request traffic currently initiated by the client device to total graph data write request traffic. In this case, the primary replica selection module can select the new primary replica node cluster from the first secondary replica node cluster set at least partially based on the second relative geographical location information and the weight coefficient of the corresponding client device. For example, the primary replica selection module can assign a corresponding primary replica migration score to the secondary replica node cluster based on a type or value of the second relative geographical location information of the secondary replica node cluster. For example, when the second relative geographical location information includes three types: information about whether the nodes are located in the same city, the same geographical area, or another geographical area, the primary replica selection module can assign the corresponding primary replica migration score to the secondary replica node cluster based on the type of the second relative geographical location information. A primary replica migration score corresponding to the information about whether the node are located in the same city is the highest, followed by a primary replica migration score corresponding to the information about the nodes are located in the same geographical area, and a primary replica migration score corresponding to the information about whether the nodes are located in another geographical area is the lowest. When the second relative geographical location information includes a relative physical distance calculated based on geographical coordinates, the primary replica selection module can determine a corresponding primary replica migration score based on a distance value of the relative physical distance. A smaller value of the relative physical distance indicates a higher corresponding primary replica migration score. Then, the primary replica selection module calculates a final primary replica migration score of the secondary replica node cluster based on the primary replica migration score of the secondary replica node cluster and the weight coefficient of the corresponding client device, and then selects the new primary replica node cluster from the first secondary replica node cluster set based on the final primary replica migration score of the secondary replica node cluster.

When a graph data write apparatus further includes a primary replica election request receiving unit, the primary replica selection module can select the new primary replica node cluster from the first secondary replica node cluster set at least partially based on the second relative geographical location information and a receiving time of a primary replica election request.

In some embodiments, the primary replica migration decision unit can further include a communication status determining module and a communication overheads determining module. The communication status determining module is configured to determine a communication status of each first secondary replica node cluster based on the receiving time of the primary replica election request. The communication overheads determining module is configured to determine data communication overheads between each first secondary replica node cluster and the client device based on the communication status of each first secondary replica node cluster and the second relative geographical location information. The primary replica selection module selects the new primary replica node cluster from the first secondary replica node cluster set based on the data communication overheads of each first secondary replica node cluster.

With reference to FIG. 1 to FIG. 10, the graph data write method and the graph data write apparatus for a distributed graph database according to embodiments of this specification are described above. The graph data write apparatus can be implemented by using hardware, or can be implemented by using software or a combination of hardware and software.

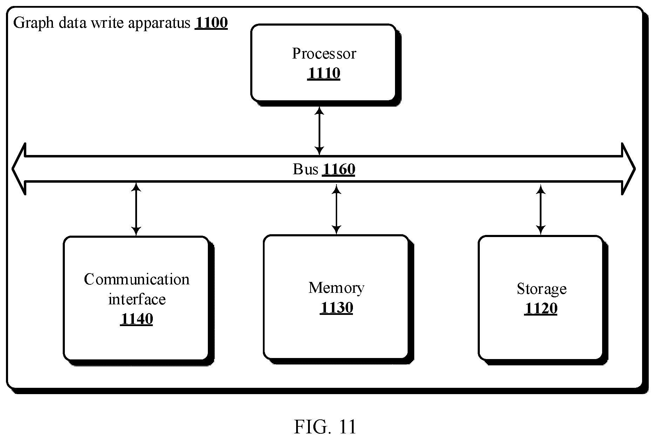

FIG. 11 is an example schematic diagram illustrating a graph data write apparatus 1100 for a distributed graph database implemented based on a computer system, according to embodiments of this specification. As shown in FIG. 11, the graph data write apparatus 1100 can include at least one processor 1110, a storage (for example, a nonvolatile memory) 1120, a memory 1130, and a communication interface 1140, and the at least one processor 1110, the storage 1120, the memory 1130, and the communication interface 1140 are connected together through a bus 1160. The at least one processor 1110 executes at least one computer-readable instruction (that is, the above-mentioned element implemented in a software form) stored or encoded in the storage.

In embodiments, computer-executable instructions are stored in the storage, and when the computer-executable instructions are executed, the at least one processor 1110 is enabled to perform the following operations: in response to receiving a graph data write request, initiating a graph data write operation to a graph data storage layer based on stored replica topology information of the distributed graph database, where the replica topology information includes node cluster identification information and geographical location information of a primary replica node cluster and node cluster identification information and geographical location information of a secondary replica node cluster, and the graph data write operation includes a graph data write operation for the primary replica node cluster and a graph data synchronization operation from the primary replica node cluster to the secondary replica node cluster; selecting, at least partially based on the geographical location information of the secondary replica node cluster in response to a failure of the graph data write operation, a new primary replica node cluster from a first secondary replica node cluster set that completes a previous round of graph data synchronization operation, and synchronously updating replica topology information at an engine analysis layer; and obtaining updated replica topology information from the engine analysis layer, and reinitiating the graph data write operation to the graph data storage layer based on the updated replica topology information.

It should be understood that when the computer-executable instructions stored in the storage are executed, the at least one processor 1110 is enabled to perform the operations and functions described above with reference to FIG. 1 to FIG. 10 in the embodiments of this specification.

According to embodiments, a program product such as a machine-readable medium (for example, a non-transitory machine-readable medium) is provided. The machine-readable medium can have instructions (that is, the above-mentioned element implemented in a software form). When the instructions are executed by a machine, the machine is enabled to perform the operations and functions described above with reference to FIG. 1 to FIG. 10 in the embodiments of this specification. Specifically, a system or an apparatus equipped with a readable storage medium can be provided, and software program code for implementing the functions in any one of the above-mentioned embodiments is stored in the readable storage medium, so that a computer or a processor of the system or the apparatus reads and executes the instructions stored in the readable storage medium.

In this case, the program code read from the readable medium can implement the functions in any one of the above-mentioned embodiments, and therefore the machine-readable code and the readable storage medium storing the machine-readable code form a part of this application.

Embodiments of the readable storage medium include a floppy disk, a hard disk, a magneto-optical disk, an optical disc (such as a CD-ROM, a CD-R, a CD-RW, a DVD-ROM, a DVD-RAM, a DVD-RW, a DVD-RW), a magnetic tape, a non-volatile memory card, and a ROM. Alternatively, the program code can be downloaded from a server computer or a cloud by a communication network.

According to embodiments, a computer program product is provided. The computer program product includes a computer program, and when the computer program is executed by a processor, the processor is enabled to perform the operations and functions described above with reference to FIG. 1 to FIG. 10 in the embodiments of this specification.

A person skilled in the art should understand that various variations and modifications can be made to the embodiments disclosed above without departing from the essence of this application. Therefore, the protection scope of this application shall be subject to the appended claims.

It is worthwhile to note that not all the steps and units in the above-mentioned processes and system structure diagrams are necessary, and some steps or units can be ignored based on actual needs. An execution sequence of the steps is not fixed, and can be determined as needed. The apparatus structure described in the above-mentioned embodiments can be a physical structure, or can be a logical structure. That is, some units can be implemented by the same physical entity, or some units can be implemented by a plurality of physical entities, or can be implemented together by some components in a plurality of independent devices.

In the above-mentioned embodiments, a hardware unit or module can be implemented mechanically or electrically. For example, the hardware unit, the module, or the processor can include a permanent dedicated circuit or logic (for example, a dedicated processor, an FPGA, or an ASIC) to complete a corresponding operation. The hardware unit or the processor can further include a programmable logic or circuit (for example, a general-purpose processor or another programmable processor), and can be set temporarily by software to complete a corresponding operation. Specific implementations (mechanical methods, dedicated permanent circuits, or temporarily disposed circuits) can be determined based on cost and time considerations.

The example embodiments are described above with reference to the specific implementations described in the accompanying drawings, but do not represent all embodiments that can be implemented or fall within the protection scope of the claims. The term "example" used throughout this specification means "used as an example, an instance, or an illustration", but does not mean "preferred" or "advantageous" over other embodiments. Specific implementations include specific details for the purpose of providing an understanding of the described technologies. However, these technologies can be implemented without these specific details. In some examples, well-known structures and apparatuses are shown in block diagram forms, to avoid difficulty in understanding the concepts of the described embodiments.

The above-mentioned descriptions of this disclosure are provided to enable any person of ordinary skill in the art to implement or use this disclosure. Various modifications made to this disclosure are clear to a person of ordinary skill in the art, and the general principles defined in this specification can also be applied to other variants without departing from the protection scope of this disclosure. Therefore, this disclosure is not limited to the examples and designs described in this specification, but corresponds to the widest scope of principles and novel features disclosed in this specification.

### EXAMPLES

1. A graph data write method for a distributed graph database, comprising:
   in response to receiving a graph data write request, initiating a graph data write operation to a graph data storage layer based on stored replica topology information of the distributed graph database, wherein the replica topology information comprises node cluster identification information and geographical location information of a primary replica node cluster and node cluster identification information and geographical location information of a secondary replica node cluster, and the graph data write operation comprises a graph data write operation for the primary replica node cluster and a graph data synchronization operation from the primary replica node cluster to the secondary replica node cluster;
   selecting, at least partially based on the geographical location information of the secondary replica node cluster in response to a failure of the graph data write operation, a new primary replica node cluster from a first secondary replica node cluster set that completes a previous round of graph data synchronization operation, and synchronously updating replica topology information at an engine analysis layer; and
   obtaining updated replica topology information from the engine analysis layer, and reinitiating the graph data write operation to the graph data storage layer based on the updated replica topology information.
2. The method according to example 1, wherein the selecting, at least partially based on the geographical location information of the secondary replica node cluster in response to a failure of the graph data write operation, a new primary replica node cluster from a first secondary replica node cluster set that completes a previous round of graph data synchronization operation comprises:
   in response to a failure of the graph data write operation, determining first relative geographical location information of a first secondary replica node cluster in the first secondary replica node cluster set relative to the primary replica node cluster at least partially based on the geographical location information of the primary replica node cluster and the geographical location information of the secondary replica node cluster; and
   selecting the new primary replica node cluster from the first secondary replica node cluster set at least partially based on the first relative geographical location information.
3. The method according to example 2, wherein the geographical location information comprises geographical area information and city information, and the first relative location information comprises information about whether the nodes are located in a same city, a same geographical area, or another geographical area; and
   the selecting the new primary replica node cluster from the first secondary replica node cluster set at least partially based on the first relative geographical location information comprises:
   determining a candidate secondary replica node cluster from the first secondary replica node cluster set at least partially based on the first relative geographical location information; and
   selecting the new primary replica node cluster from the candidate secondary replica node cluster, wherein
   in response to the first relative geographical location information indicating that there is a secondary replica node cluster located in the same city, the secondary replica node cluster located in the same city is determined as the candidate secondary replica node cluster, in response to the first relative geographical location information indicating that there is no secondary replica node cluster located in the same city but there is a secondary replica node cluster located in the same geographical area, the secondary replica node cluster located in the same geographical area is determined as the candidate secondary replica node cluster, or in response to the first relative geographical location information indicating that there is no secondary replica node cluster located in the same city and no secondary replica node cluster located in the same geographical area, a secondary replica node cluster located in the another geographical area is determined as the candidate secondary replica node cluster.
4. The method according to example 3, wherein the candidate secondary replica node cluster comprises at least two candidate secondary replica node clusters, and the selecting the new primary replica node cluster from the candidate secondary replica node cluster comprises:
   selecting the new primary replica node cluster from the candidate secondary replica node cluster randomly or in a round-robin manner.
5. The method according to example 1, wherein the selecting a new primary replica node cluster from a first secondary replica node cluster set at least partially based on the geographical location information of the secondary replica node cluster in response to a failure of the graph data write operation comprises:
   selecting the new primary replica node cluster from the first secondary replica node cluster set at least partially based on geographical location information of a first secondary replica node cluster and geographical location information of a client device in response to a failure of the graph data write operation.
6. The method according to example 5, wherein the selecting the new primary replica node cluster from the first secondary replica node cluster set at least partially based on geographical location information of a first secondary replica node cluster and geographical location information of a client device in response to a failure of the graph data write operation comprises:
   in response to a failure of the graph data write operation, determining second relative geographical location information of the first secondary replica node cluster relative to the client device at least partially based on the geographical location information of the first secondary replica node cluster and the geographical location information of the client device; and
   selecting the new primary replica node cluster from the first secondary replica node cluster set at least partially based on the second relative geographical location information.
7. The method according to example 6, wherein the client device comprises at least two client devices, and each client device has a weight coefficient allocated based on a ratio of initiated graph data write request traffic; and
   the selecting the new primary replica node cluster from the first secondary replica node cluster set at least partially based on the second relative geographical location information comprises:
   selecting the new primary replica node cluster from the first secondary replica node cluster set at least partially based on the second relative geographical location information and the weight coefficient of the corresponding client device.
8. The method according to example 6, further comprising:
   in response to a failure of the graph data write operation, receiving a primary replica election request from the first secondary replica node cluster; and
   the selecting the new primary replica node cluster from the first secondary replica node cluster set at least partially based on the second relative geographical location information comprises:
      selecting the new primary replica node cluster from the first secondary replica node cluster set at least partially based on the second relative geographical location information and a receiving time of the primary replica election request.
9. The method according to example 8, wherein the selecting the new primary replica node cluster from the first secondary replica node cluster set at least partially based on the second relative geographical location information and a receiving time of the primary replica election request comprises:
   determining a communication status of each first secondary replica node cluster based on the receiving time of the primary replica election request;
   determining data communication overheads between each first secondary replica node cluster and the client device based on the communication status of each first secondary replica node cluster and the second relative geographical location information; and
   selecting the new primary replica node cluster from the first secondary replica node cluster set based on the data communication overheads of each first secondary replica node cluster.
10. The method according to example 2, further comprising:
   in response to a failure of the graph data write operation, receiving a primary replica election request from the first secondary replica node cluster; and
   the selecting the new primary replica node cluster from the first secondary replica node cluster set at least partially based on the first relative geographical location information comprises:
      selecting the new primary replica node cluster from the first secondary replica node cluster set at least partially based on the first relative geographical location information and a receiving time of the primary replica election request.
11. The method according to example 10, wherein the selecting the new primary replica node cluster from the first secondary replica node cluster set at least partially based on the first relative geographical location information and a receiving time of the primary replica election request comprises:
   determining a communication status of each first secondary replica node cluster based on the receiving time of the primary replica election request; and
   selecting the new primary replica node cluster from the first secondary replica node cluster set based on the communication status of each first secondary replica node cluster and the first relative location information relative to the primary replica node cluster.
12. A graph data write apparatus for a distributed graph database, comprising:
   a graph data write unit, located at an API interface layer and configured to: in response to receiving a graph data write request, initiate a graph data write operation to a graph data storage layer based on stored replica topology information of the distributed graph database, wherein the replica topology information comprises node cluster identification information and geographical location information of a primary replica node cluster and node cluster identification information and geographical location information of a secondary replica node cluster, and the graph data write operation comprises a graph data write operation for the primary replica node cluster and a graph data synchronization operation from the primary replica node cluster to the secondary replica node cluster;
   a primary replica migration decision unit, located at the graph data storage layer and configured to select, a least partially based on the geographical location information of the secondary replica node cluster in response to a failure of the graph data write operation, a new primary replica node cluster from a first secondary replica node cluster set that completes a previous round of graph data synchronization operation, and synchronously update replica topology information at an engine analysis layer; and
   a replica topology information acquisition unit, located at the API interface layer and configured to obtain updated replica topology information from the engine analysis layer, so that the graph data write unit reinitiates the graph data write operation to the graph data storage layer based on the updated replica topology information.
13. The graph data write apparatus according to example 12, wherein the primary replica migration decision unit comprises:
   a first relative geographical location determining module, configured to: in response to a failure of the graph data write operation, determine first relative geographical location information of a first secondary replica node cluster in the first secondary replica node cluster set relative to the primary replica node cluster at least partially based on the geographical location information of the primary replica node cluster and the geographical location information of the secondary replica node cluster; and
   a primary replica selection module, configured to select the new primary replica node cluster from the first secondary replica node cluster set at least partially based on the first relative geographical location information.
14. The graph data write apparatus according to example 13, wherein the geographical location information comprises geographical area information and city information, and the relative location information comprises information about whether the nodes are located in a same city, a same geographical area, or another geographical area;
   the primary replica migration decision unit further comprises:
   a candidate secondary replica determining module, configured to determine a candidate secondary replica node cluster from the first secondary replica node cluster set at least partially based on the first relative geographical location information; and
   the primary replica selection module selects the new primary replica node cluster from the candidate secondary replica node cluster, wherein
   in response to the first relative geographical location information indicating that there is a secondary replica node cluster located in the same city, the candidate secondary replica determining module determines the secondary replica node cluster located in the same city as the candidate secondary replica node cluster, in response to the first relative geographical location information indicating that there is no secondary replica node cluster located in the same city but there is a secondary replica node cluster located in the same geographical area, the candidate secondary replica determining module determines the secondary replica node cluster located in the same geographical area as the candidate secondary replica node cluster, or in response to the first relative geographical location information indicating that there is no secondary replica node cluster located in the same city and no secondary replica node cluster located in the same geographical area, the candidate secondary replica determining module determines a secondary replica node cluster located in the another geographical area as the candidate secondary replica node cluster.
15. The graph data write apparatus according to example 12, wherein the primary replica migration decision unit selects the new primary replica node cluster from the first secondary replica node cluster set at least partially based on geographical location information of a first secondary replica node cluster and geographical location information of a client device in response to a failure of the graph data write operation.
16. The graph data write apparatus according to example 15, wherein the primary replica migration decision unit comprises:
   a second relative geographical location determining module, configured to: in response to a failure of the graph data write operation, determine second relative geographical location information of the first secondary replica node cluster relative to the client device at least partially based on the geographical location information of the first secondary replica node cluster and the geographical location information of the client device; and
   a primary replica selection module, configured to select the new primary replica node cluster from the first secondary replica node cluster set at least partially based on the second relative geographical location information.
17. The graph data write apparatus according to example 16, further comprising:
   a primary replica election request receiving unit, configured to: in response to a failure of the graph data write operation, receive a primary replica election request from the first secondary replica node cluster; and
   the primary replica selection module selects the new primary replica node cluster from the first secondary replica node cluster set at least partially based on the second relative geographical location information and a receiving time of the primary replica election request.
18. The graph data write apparatus according to example 17, wherein the primary replica migration decision unit further comprises:
   a communication status determining module, configured to determine a communication status of each first secondary replica node cluster based on the receiving time of the primary replica election request; and
   a communication overheads determining module, configured to determine data communication overheads between each first secondary replica node cluster and the client device based on the communication status of each first secondary replica node cluster and the second relative geographical location information; and
   the primary replica selection module selects the new primary replica node cluster from the first secondary replica node cluster set based on the data communication overheads of each first secondary replica node cluster.
19. The graph data write apparatus according to example 13, further comprising:
   a primary replica election request receiving unit, configured to: in response to a failure of the graph data write operation, receive a primary replica election request from the first secondary replica node cluster; and
   the primary replica migration decision unit selects the new primary replica node cluster from the first secondary replica node cluster set at least partially based on the first relative geographical location information and a receiving time of the primary replica election request.
20. The graph data write apparatus according to example 19, wherein the primary replica migration decision unit comprises:
   a communication status determining module, configured to determine a communication status of each first secondary replica node cluster based on the receiving time of the primary replica election request; and
   the primary replica selection module selects the new primary replica node cluster from the first secondary replica node cluster set based on the communication status of each first secondary replica node cluster and the first relative location information relative to the primary replica node cluster.
21. A graph data write apparatus for a distributed graph database, comprising:
   at least one processor;
   a storage coupled to the at least one processor; and
   a computer program stored in the storage, wherein the at least one processor executes the computer program to implement the graph data write method for a distributed graph database according to any one of examples 1 to 11.

## Claims

1. A method for writing graph data for a distributed graph database, the method comprising:
in response to receiving a graph data write request, initiating a graph data write operation to a graph data storage layer based on stored replica topology information of the distributed graph database, wherein the replica topology information comprises node cluster identification information and geographical location information of a primary replica node cluster and node cluster identification information and geographical location information of a secondary replica node cluster, and the graph data write operation comprises a graph data write operation for the primary replica node cluster and a graph data synchronization operation from the primary replica node cluster to the secondary replica node cluster;
selecting, at least partially based on the geographical location information of the secondary replica node cluster in response to a failure of the graph data write operation, a new primary replica node cluster from a first secondary replica node cluster set that completes a previous round of graph data synchronization operation, and synchronously updating replica topology information at an engine analysis layer; and
obtaining updated replica topology information from the engine analysis layer, and reinitiating the graph data write operation to the graph data storage layer based on the updated replica topology information.

2. The method according to claim 1, wherein the selecting, at least partially based on the geographical location information of the secondary replica node cluster in response to a failure of the graph data write operation, a new primary replica node cluster from a first secondary replica node cluster set that completes a previous round of graph data synchronization operation comprises:
in response to a failure of the graph data write operation, determining first relative geographical location information of a first secondary replica node cluster in the first secondary replica node cluster set relative to the primary replica node cluster at least partially based on the geographical location information of the primary replica node cluster and the geographical location information of the secondary replica node cluster; and
selecting the new primary replica node cluster from the first secondary replica node cluster set at least partially based on the first relative geographical location information.

3. The method according to claim 2, wherein the geographical location information comprises geographical area information and city information, and the first relative location information comprises information about whether the nodes are located in a same city, a same geographical area, or another geographical area; and
selecting the new primary replica node cluster from the first secondary replica node cluster set at least partially based on the first relative geographical location information comprises:
determining a candidate secondary replica node cluster from the first secondary replica node cluster set at least partially based on the first relative geographical location information; and
selecting the new primary replica node cluster from the candidate secondary replica node cluster, wherein
in response to the first relative geographical location information indicating that there is a secondary replica node cluster located in the same city, the secondary replica node cluster located in the same city is determined as the candidate secondary replica node cluster, in response to the first relative geographical location information indicating that there is no secondary replica node cluster located in the same city but there is a secondary replica node cluster located in the same geographical area, the secondary replica node cluster located in the same geographical area is determined as the candidate secondary replica node cluster, or in response to the first relative geographical location information indicating that there is no secondary replica node cluster located in the same city and no secondary replica node cluster located in the same geographical area, a secondary replica node cluster located in the another geographical area is determined as the candidate secondary replica node cluster; optionally
wherein the candidate secondary replica node cluster comprises at least two candidate secondary replica node clusters, and the selecting the new primary replica node cluster from the candidate secondary replica node cluster comprises:
selecting the new primary replica node cluster from the candidate secondary replica node cluster randomly or in a round-robin manner.

4. The method according to any one of claims 1 to 3, wherein selecting a new primary replica node cluster from a first secondary replica node cluster set at least partially based on the geographical location information of the secondary replica node cluster in response to a failure of the graph data write operation comprises:
selecting the new primary replica node cluster from the first secondary replica node cluster set at least partially based on geographical location information of a first secondary replica node cluster and geographical location information of a client device in response to a failure of the graph data write operation.

5. The method according to claim 4, wherein selecting the new primary replica node cluster from the first secondary replica node cluster set at least partially based on geographical location information of a first secondary replica node cluster and geographical location information of a client device in response to a failure of the graph data write operation comprises:
in response to a failure of the graph data write operation, determining second relative geographical location information of the first secondary replica node cluster relative to the client device at least partially based on the geographical location information of the first secondary replica node cluster and the geographical location information of the client device; and
selecting the new primary replica node cluster from the first secondary replica node cluster set at least partially based on the second relative geographical location information.

6. The method according to claim 5, wherein the client device comprises at least two client devices, and each client device has a weight coefficient allocated based on a ratio of initiated graph data write request traffic; and
selecting the new primary replica node cluster from the first secondary replica node cluster set at least partially based on the second relative geographical location information comprises:
selecting the new primary replica node cluster from the first secondary replica node cluster set at least partially based on the second relative geographical location information and the weight coefficient of the corresponding client device.

7. The method according to claim 5, further comprising:
in response to a failure of the graph data write operation, receiving a primary replica election request from the first secondary replica node cluster; and
selecting the new primary replica node cluster from the first secondary replica node cluster set at least partially based on the second relative geographical location information comprises:
selecting the new primary replica node cluster from the first secondary replica node cluster set at least partially based on the second relative geographical location information and a receiving time of the primary replica election request; optionally
wherein selecting the new primary replica node cluster from the first secondary replica node cluster set at least partially based on the second relative geographical location information and a receiving time of the primary replica election request comprises:
determining a communication status of each first secondary replica node cluster based on the receiving time of the primary replica election request;
determining data communication overheads between each first secondary replica node cluster and the client device based on the communication status of each first secondary replica node cluster and the second relative geographical location information; and
selecting the new primary replica node cluster from the first secondary replica node cluster set based on the data communication overheads of each first secondary replica node cluster.

8. The method according to claim 2, further comprising:
in response to a failure of the graph data write operation, receiving a primary replica election request from the first secondary replica node cluster; and
the selecting the new primary replica node cluster from the first secondary replica node cluster set at least partially based on the first relative geographical location information comprises:
selecting the new primary replica node cluster from the first secondary replica node cluster set at least partially based on the first relative geographical location information and a receiving time of the primary replica election request; optionally
wherein the selecting the new primary replica node cluster from the first secondary replica node cluster set at least partially based on the first relative geographical location information and a receiving time of the primary replica election request comprises:
determining a communication status of each first secondary replica node cluster based on the receiving time of the primary replica election request; and
selecting the new primary replica node cluster from the first secondary replica node cluster set based on the communication status of each first secondary replica node cluster and the first relative location information relative to the primary replica node cluster.

9. An apparatus for writing graph data for a distributed graph database, the apparatus comprising:
a graph data write unit, located at an API interface layer and configured to: in response to receiving a graph data write request, initiate a graph data write operation to a graph data storage layer based on stored replica topology information of the distributed graph database, wherein the replica topology information comprises node cluster identification information and geographical location information of a primary replica node cluster and node cluster identification information and geographical location information of a secondary replica node cluster, and the graph data write operation comprises a graph data write operation for the primary replica node cluster and a graph data synchronization operation from the primary replica node cluster to the secondary replica node cluster;
a primary replica migration decision unit, located at the graph data storage layer and configured to select, a least partially based on the geographical location information of the secondary replica node cluster in response to a failure of the graph data write operation, a new primary replica node cluster from a first secondary replica node cluster set that completes a previous round of graph data synchronization operation, and synchronously update replica topology information at an engine analysis layer; and
a replica topology information acquisition unit, located at the API interface layer and configured to obtain updated replica topology information from the engine analysis layer, so that the graph data write unit reinitiates the graph data write operation to the graph data storage layer based on the updated replica topology information.

10. The apparatus according to claim 9, wherein the primary replica migration decision unit comprises:
a first relative geographical location determining module, configured to: in response to a failure of the graph data write operation, determine first relative geographical location information of a first secondary replica node cluster in the first secondary replica node cluster set relative to the primary replica node cluster at least partially based on the geographical location information of the primary replica node cluster and the geographical location information of the secondary replica node cluster; and
a primary replica selection module, configured to select the new primary replica node cluster from the first secondary replica node cluster set at least partially based on the first relative geographical location information; optionally
wherein the geographical location information comprises geographical area information and city information, and the relative location information comprises information about whether the nodes are located in a same city, a same geographical area, or another geographical area;
the primary replica migration decision unit further comprises:
a candidate secondary replica determining module, configured to determine a candidate secondary replica node cluster from the first secondary replica node cluster set at least partially based on the first relative geographical location information; and
the primary replica selection module selects the new primary replica node cluster from the candidate secondary replica node cluster, wherein
in response to the first relative geographical location information indicating that there is a secondary replica node cluster located in the same city, the candidate secondary replica determining module determines the secondary replica node cluster located in the same city as the candidate secondary replica node cluster, in response to the first relative geographical location information indicating that there is no secondary replica node cluster located in the same city but there is a secondary replica node cluster located in the same geographical area, the candidate secondary replica determining module determines the secondary replica node cluster located in the same geographical area as the candidate secondary replica node cluster, or in response to the first relative geographical location information indicating that there is no secondary replica node cluster located in the same city and no secondary replica node cluster located in the same geographical area, the candidate secondary replica determining module determines a secondary replica node cluster located in the another geographical area as the candidate secondary replica node cluster.

11. The apparatus according to claim 9, wherein the primary replica migration decision unit selects the new primary replica node cluster from the first secondary replica node cluster set at least partially based on geographical location information of a first secondary replica node cluster and geographical location information of a client device in response to a failure of the graph data write operation.

12. The apparatus according to claim 11, wherein the primary replica migration decision unit comprises:
a second relative geographical location determining module, configured to: in response to a failure of the graph data write operation, determine second relative geographical location information of the first secondary replica node cluster relative to the client device at least partially based on the geographical location information of the first secondary replica node cluster and the geographical location information of the client device; and
a primary replica selection module, configured to select the new primary replica node cluster from the first secondary replica node cluster set at least partially based on the second relative geographical location information.

13. The apparatus according to claim 12, further comprising:
a primary replica election request receiving unit, configured to: in response to a failure of the graph data write operation, receive a primary replica election request from the first secondary replica node cluster; and
the primary replica selection module selects the new primary replica node cluster from the first secondary replica node cluster set at least partially based on the second relative geographical location information and a receiving time of the primary replica election request; optionally
wherein the primary replica migration decision unit further comprises:
a communication status determining module, configured to determine a communication status of each first secondary replica node cluster based on the receiving time of the primary replica election request; and
a communication overheads determining module, configured to determine data communication overheads between each first secondary replica node cluster and the client device based on the communication status of each first secondary replica node cluster and the second relative geographical location information; and
the primary replica selection module selects the new primary replica node cluster from the first secondary replica node cluster set based on the data communication overheads of each first secondary replica node cluster.

14. The apparatus according to claim 10, further comprising:
a primary replica election request receiving unit, configured to: in response to a failure of the graph data write operation, receive a primary replica election request from the first secondary replica node cluster; and
the primary replica migration decision unit selects the new primary replica node cluster from the first secondary replica node cluster set at least partially based on the first relative geographical location information and a receiving time of the primary replica election request; optionally
wherein the primary replica migration decision unit comprises:
a communication status determining module, configured to determine a communication status of each first secondary replica node cluster based on the receiving time of the primary replica election request; and
the primary replica selection module selects the new primary replica node cluster from the first secondary replica node cluster set based on the communication status of each first secondary replica node cluster and the first relative location information relative to the primary replica node cluster.

15. An apparatus for writing graph data for a distributed graph database, the apparatus comprising:
at least one processor;
a storage coupled to the at least one processor; and
a computer program stored in the storage, wherein the at least one processor executes the computer program to implement the graph data write method for a distributed graph database according to any one of claims 1 to 8.
